# EUROPÄISCHE PATENTSCHRIFT

(11) **EP 1 331 476 B1**
(45) Veröffentlichungstag und Bekanntmachung des Hinweises auf die Patenterteilung: **26.04.2006**
(21) Anmeldenummer: 02002156.4
(22) Anmeldetag: 29.01.2002
(51) Int. Cl.: G01N 22/04

(54) **Mikrowellenanordnung zur Produktfeuchtemessung, mit Temperaturkompensation**
Microwave apparatus for moisture measurement, with temperature compensation
Appareil à micro-ondes pour des mesures de l'humidité, avec compensation de température

(43) Veröffentlichungstag der Anmeldung: 30.07.2003
(73) Patentinhaber: AMS- Advanced Microwave Systems GmbH, 25336 Elmshorn (DE)
(72) Erfinder: Knöchel, Reinhard, 25336 Elmshorn (DE); Taute, Wolfgang, 24235 Laboe (DE); Döscher, Claas, 20253 Hamburg (DE)
(74) Vertreter: Wenzel & Kalkoff

(56) Entgegenhaltungen:
- DE-A- 19 705 260
- RU-C- 2 060 490
- US-A- 4 042 879
- US-A- 5 845 529
- HERRMANN R ET AL: "FEUCHTEMESSUNG MIT MIKROWELLEN-RESONATOREN" TECHNISCHES MESSEN TM, R.OLDENBOURG VERLAG. MUNCHEN, DE, Bd. 64, Nr. 11, 1. November 1997 (1997-11-01), Seiten 447-452, XP000738914 ISSN: 0171-8096
- KUPFER K: "STOERGROESSEN BEI DER APPLIKATION VON MIKROWELLENFEUCHTEMESSVERFAHREN. \DISTURBANCES BY THE APPLICATION OF MICROWAVE MOISTURE MEASUREMENTS" TECHNISCHES MESSEN TM, R.OLDENBOURG VERLAG. MUNCHEN, DE, Bd. 60, Nr. 1, 1993, Seiten 19-28, XP000329666 ISSN: 0171-8096

## Beschreibung

Die Erfindung betrifft eine Meßanordnung zur Feuchtemessung eines Produkts mittels Mikrowellen nach dem Oberbegriff von Anspruch 1.

Bei der Feuchtemessung mit einer derartigen Meßanordnung hängen die Meßgrößen, insbesondere die Resonanzfrequenz und die Breite der Resonanzkurve, von der Temperatur in dem ersten Resonator ab. Um den Einfluß dieser Störgröße auf den Meßfehler zu kompensieren, ist es bekannt, einen Temperaturmeßfühler an einer bestimmten Stelle des ersten Resonators vorzusehen und mit Hilfe der gemessenen Temperatur eine rechnerische Korrektur durchzuführen. Da die Temperatur in dem ersten Resonator nur punktuell bestimmt wird, ist die Genauigkeit der Kompensation insbesondere bei einer räumlich inhomogenen und/oder zeitlich veränderlichen Temperaturverteilung in dem ersten Resonator begrenzt.

Generell ist zur Kompensation von Temperatureinflüssen die Verwendung unterschiedlicher Materialien, im vorliegenden Fall für den ersten Resonator, mit Temperaturkoeffizienten entgegengesetzten Vorzeichens bekannt. Jedoch können sich - abgesehen von einem erhöhten Herstellungsaufwand - insbesondere die Übergangsstellen zwischen den unterschiedlichen Materialien mikrowellentechnisch nachteilig auswirken.

Die EP 0 288 135 B1 offenbart eine auf der Verwendung eines externen Streufeldes beruhende Mikrowellenanordnung nach dem Oberbegriff von Anspruch 1.

Die US 4 042 879 beschreibt einen Hohlraumsensor zur Messung der Feuchte von Aerosolteilchen in einem Trägergasstrom. Die Aerosolteilchen werden zur Feuchtemessung auf einem im Trägergasstrom angeordneten Filter gesammelt. Die Anordnung umfaßt einen im Trägergasstrom angeordneten gleichartigen Referenzhohlraum zur Kompensation von Temperaturänderungen, Änderungen der Trägergaszusammensetzung und anderen Umgebungseinflüssen.

Die WO 00/55606 beschreibt ein Meßinstrument zur Bestimmung der Dichte von Fasermaterial mit einem Meßkammer, durch die ein zu messender Faserstrang geführt wird, und einer Referenzkammer zur Kompensation von sich ändernden Umgebungsbedingungen.

Die RU 2 060 490 C1 offenbart eine Messvorrichtung zum Messen der Feuchte eines dielektrischen Materials mit einem Mess-Hohlraumresonator und einem Referenz-Hohlraumresonator.

Eine Messvorrichtung mit zwei nebeneinander angeordneten Strenfeldresonatoren ist aus DE 4342505 C1 bekannt.

Die Aufgabe der Erfindung besteht darin, bei einer eingangs genannten Meßanordnung den durch die thermische Belastung des ersten Resonators hervorgerufenen Meßfehler zu reduzieren.

Die Erfindung löst diese Aufgabe mit den Merkmalen von Anspruch 1.

Zunächst seien einige der verwendeten Begriffe erläutert.

"Resonator" betrifft einen räumlichen Bereich, in dem sich ein stehendes Mikrowellenfeld ausbreiten kann. Dabei kann es sich um einen geschlossenen oder im wesentlichen geschlossenen Hohlraumresonator oder um einen offenen Resonator handeln. Beispiele für offene Resonatoren: über Chokes (Hochfrequenzfallen) geöffnete Resonatoren; Resonatoren mit einem externen elektrischen Streufeld, insbesondere Streufeld einer offenen oder in sich geschlossenen Mikrowellenleitung (bspw. Mikrostreifenleitung, Schlitzleitung) oder des offenen Endes einer Koaxialleitung, Streufeld dielektrischer Resonatoren oder in der Öffnung eines ansonsten geschlossenen Resonators mit oder ohne dielektrischer Füllung.

Erfindungsgemäß ist der erste Resonator ein Resonator mit einen elektrischen Strenfeld.

Ein Produkt, dessen Feuchte gemessen wird, ist in einem "Produktraum" genannten Raumbereich angeordnet, der im Betrieb des Sensors zu dem Raumbereich des ersten Resonators in einer festen räumlichen Beziehung steht. Erfindungsgemäß ist der Produktraum räumlich vom ersten Resonatorraum getrennt. Dabei kann der Produktraum an den ersten Resonatorraum angrenzen; er kann auch räumlich entfernt davon angeordnet sein, wobei das Feld über eine Leitung von dem Resonator zu dem Produktraum geleitet werden kann. Die Mikrowellen treten in den Produktraum ein, um in Wechselwirkung mit dem Produkt zu treten. In der Regel ist daher der erste Mikrowellenresonator zum Produktraum hin für Mikrowellen durchlässig. Das Produkt kann ein fortlaufender Produktstrom sein, bspw. ein flächiges Holzfurnier oder ein strangförmiges Produkt; es kann auch als einzelne Portion vorliegen.

Erfindungsgemäß werden die mit dem zweiten Resonator - aufgrund von dessen Mikrowellen-Abschirmung zum Produktraum hin - bestimmten Meßgrößen nicht von der Wechselwirkung des Mikrowellenfeldes mit der Dielektrizitätskonstanten beeinflußt. Indem die Meßgrößen des ersten Resonators mit den entsprechenden Meßgrößen des zweiten Resonators in geeigneter Weise in Beziehung gesetzt werden, kann daher der Einfluß von Störgrößen, die das Meßsignal beider Resonatoren beeinflussen, kompensiert werden. Eine dieser Störgrößen ist der thermische Einfluß der Umgebung, insbesondere die von dem Produkt ausgehenden Wärmebelastung.

Die Erfindung hat erkannt, daß die Temperaturverteilung in dem ersten Resonator im allgemeinen räumlich - insbesondere in einer Richtung senkrecht zum Produktraum, d.h. zu der den Produktraum begrenzenden Fläche - inhomogen und/oder zeitlich veränderlich ist. Dieser Erkenntnis folgend ermöglicht die Erfindung die Messung einer integrierten Temperatur, d.h. gemittelt über einen Raumbereich, der hinsichtlich seiner Anordnung relativ zum Produktraum und/oder seiner Ausdehnung in einer Richtung senkrecht zum Produktraum dem ersten Resonatorraum entspricht und daher im wesentlichen die gleiche Temperaturverteilung wie dieser aufweist. Dies steht im Gegensatz zu einer Temperaturmessung in einem Raumbereich, dessen Ausdehnung gering ist im Verhältnis zur Ausdehnung des ersten Resonators senkrecht zum Produktraum.

Insbesondere bei einer zeitlich veränderlichen Wärmebelastung kann die herkömmliche Messung der Temperatur des ersten Resonators an einem Punkt im Einzelfall zu einem verzerrten Meßergebnis mit entsprechen großem Meßfehler führen. Als Beispiel sei eine Anordnung betrachtet, bei der ein Temperaturmeßfühler an der vom Produktraum abgewandten Seite des ersten Resonators angeordnet ist. Eine Erwärmung des Produkts wirkt sich bereits durch die Erwärmung der dem Produktraum zugewandten Seite des ersten Resonators auf das Meßsignal aus; dies kann jedoch erst mit der Erwärmung der dem Produktraum abgewandten Seite des ersten Resonators erfaßt und kompensiert werden. In dem dazwischenliegenden Zeitraum findet demnach keine zufriedenstellende Temperaturkompensation statt.

Besonders gewinnbringend ist die Erfindung im Zusammenhang mit einem mit Dielektrikum gefüllten ersten Resonator. Dabei meint der Begriff "Dielektrikum" eine Dielektrizitätszahl von größer als 1, vorzugsweise mindestens 2, weiter vorzugsweise mindestens 5. Die Temperaturabhängigkeit der Meßgrößen des ersten Resonators wird dann maßgeblich von der Temperaturabhängigkeit der Dielektrizitätszahl der dielektrischen Füllung bestimmt. Aufgrund der häufig schlechten Wärmeleitungseigenschaften dielektrischer Materialien wirkt sich eine räumlich inhomogene Temperaturverteilung bzw. eine sich zeitlich verändernde Wärmebelastung besonders stark aus, da es lange dauern kann, bis sich eine stationäre Temperaturverteilung ausgebildet hat. Vorzugsweise ist demnach der zweite Resonator ebenfalls mit einem entsprechenden Dielektrikum gefüllt, das zu jedem Zeitpunkt der Messung eine vergleichbare Temperaturverteilung wie die dielektrische Füllung des ersten Resonators aufweist.

Vorzugsweise weist der zweite Resonator in Bezug auf die räumliche Temperaturverteilung und/oder in Bezug auf zeitliche Temperaturänderungen vergleichbare Eigenschaften wie der erste Resonator auf. Dies betrifft beispielsweise den Abstand der Resonatoren von dem Produktraum (Ansprüche 4, 5), die mittlere Ausdehnung der Resonatoren senkrecht zu der den Produktraum begrenzenden Fläche (Anspruch 6) sowie das Material bzw. Materialien der Resonatoren (Anspruch 7), bspw. hinsichtlich der Wärmeleitungsfähigkeit, der Wärmeeindringzahl, des Wärmeübergangs, des Wärmedurchgangs, der Wärmekapazität und/oder weiterer thermisch relevanter Größen. Wenn die thermischen Eigenschaften des ersten Resonators von einem Material, bspw. einer dielektrischen Füllung, dominiert werden, reicht es in der Regel aus, wenn thermische Eigenschaften in Bezug auf dieses Material übereinstimmen.

Vorzugsweise sind beide Resonatoren in der Richtung senkrecht zu der den Produktraum begrenzenden Fläche im wesentlichen - abgesehen von der Mikrowellen-Abschirmung des zweiten Resonators zum Produktraum hin - gleichartig aufgebaut, bspw. hinsichtlich der Materialfolge und/oder -anordnung. Die Mikrowellen-Abschirmung des zweiten Resonators zum Produktraum hin soll sich vorzugsweise möglichst wenig auf den Wärmeübergang auswirken. Sie ist vorzugsweise metallisch und wird weiter vorzugsweise von einer dünnen metallischen Beschichtung gebildet und/oder weist vorzugsweise eine gute Wärmeleitfähigkeit auf. Die Beschichtung kann zu diesem Zweck netzartig oder perforiert sein.

Vorzugsweise sind der erste und der zweite Resonator aneinander angrenzend angeordnet und/oder bilden eine bauliche Einheit; dadurch kann sichergestellt werden, daß beide Resonatoren unabhängig vom Einbau durch den jeweiligen Monteur der gleichen thermischen Belastung durch die Produktwärme ausgesetzt sind. Es ist aber auch möglich, beide Resonatoren räumlich beabstandet voneinander bspw. an unterschiedlichen Stellen des Produktstroms anzuordnen. Besonders bevorzugt ist eine Anordnung mit einem Ringresonator und einem von dem Ringresonator umschlossenen Resonator. Dann ist unabhängig von der Orientierung der Meßanordnung sichergestellt, daß beide Resonatoren der gleichen thermischen Belastung durch die Produktwärme ausgesetzt sind. Weiterhin wird die Baugröße nicht erhöht, wenn der ohnehin vorhandene, von dem ersten Ringresonator umschlossene Raum zur Unterbringung des zweiten Resonators genutzt wird.

Der zweite Resonator kann zweckmäßigerweise auch zur Kompensation des Einflusses weiterer Störgrößen, beispielsweise längerfristige Driften der Elektronik oder Materialveränderungen durch Alterung, genutzt werden.

Die Produkttemperatur hat einen unmittelbaren Einfluß auf das Meßsignal aufgrund der Temperaturabhängigkeit der Dielektrizitätskonstante des Produkts. Die Anordnung umfaßt daher vorzugsweise einen zusätzlichen Temperatursensor, bspw. ein PT-100-Element, zur direkten und schnellen Messung der Produkttemperatur, um das Meßsignal in an sich bekannter Weise entsprechend korrigieren zu können.

Die Erfindung ist grundsätzlich sowohl bei einem auf Transmissionsmessung als auch bei einem auf Reflexionsmessung beruhenden ersten Resonator anwendbar.

Die Erfindung wird im folgenden anhand vorteilhafter Ausführungsbeispiele unter Bezugnahme auf die beigefügten Figuren erläutert. Es zeigen:
- Fig. 1:: Querschnittsansicht einer Ausführungsform der erfindungsgemäßen Meßanordnung;
- Fig. 2:: Aufsicht auf die Meßanordnung aus Fig. 1, jedoch ohne die Abdeckung 14;
- Fig. 3:: Querschnittsansicht einer weiteren Ausführungsform der erfindungsgemäßen Meßanordnung; und
- Fig. 4:: Querschnittsansicht einer gegenüber Fig. 1 modifizierten Ausführungsform.

Die in den Figuren gezeigten Ausführungsformen betreffen jeweils eine baulich einheitliche Meßanordnung, die als Mikrowellensensor 1 bezeichnet wird.

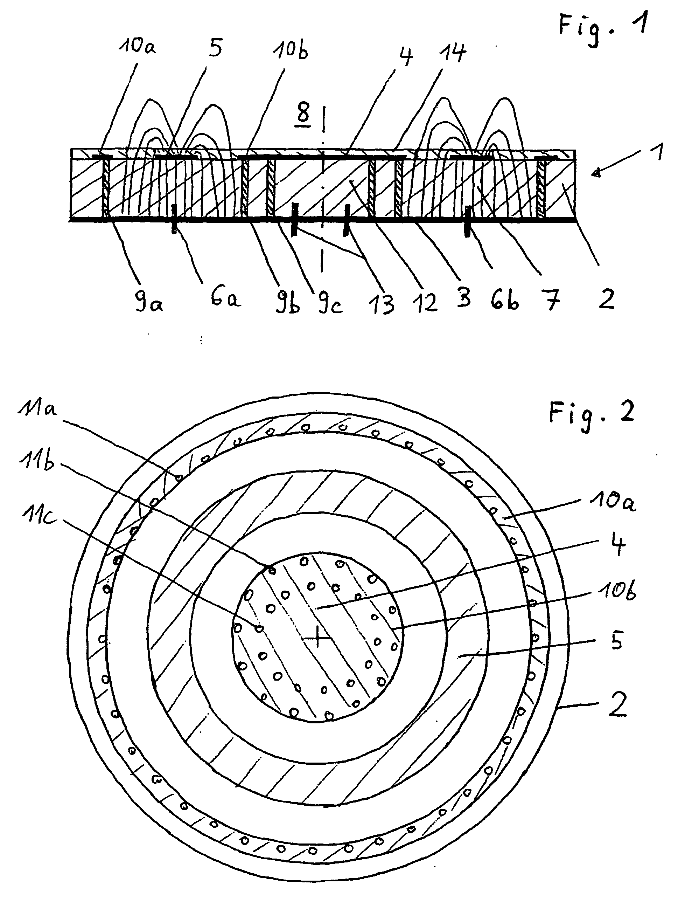

Zunächst sei die in den Fig. 1 und 2 gezeigte Ausführungsform betrachtet. Die durchgehende dielektrische Scheibe 2 besteht aus einem handelsüblichen Dielektrikum mit einer Dielektrizitätszahl von vorzugsweise mehr als 6, weiter vorzugsweise mehr als 30. Eine hohe Dielektrizitätszahl ist im Hinblick auf eine möglichst geringe Abstrahlung von Mikrowellenenergie vorteilhaft.

An ihrer der Meßseite abgewandten Stirnseite ist die dielektrische Scheibe 2 vollständig mit einer Metallschicht 3 beschichtet. Auf der gegenüberliegenden, meßseitigen Stirnseite ist die dielektrische Scheibe 2 mit einer konzentrischen äußeren ringförmigen Metallschicht 5 beschichtet. Die dielektrische Scheibe 2 und die Metallschichten 3 bilden im Bereich der Metallschicht 5 mit dieser zusammen eine ringförmig in sich geschlossene, resonante Mikrostreifenleitung, die im weiteren als Mikrostreifen-Ringresonator oder einfach Ringresonator 7 bezeichnet wird.

Mikrowellen werden mittels geeigneter Einrichtungen erzeugt und über einen Anschluß 6a in den Ringresonator 7 eingespeist. Bei einer bestimmten Frequenz werden stehende Wellen in dem Ringresonator 7 angeregt, wobei eine ganze Zahl von Wellenlängen, zur Verringerung von Abstrahlungsverlusten vorzugsweise mindestens fünf, auf dessen Umfang Platz findet. Der Feldverlauf in einem Feldmaximum im Bereich des Ringresonators 7 ist in Fig. 1 schematisch angedeutet. Mikrowellen treten aus dem Ringresonator 7 in den Produktraum 8 ein und können mit einem darin befindlichen Produkt in Wechselwirkung treten. Die Mikrowellen werden über einen Anschluß 6b ausgekoppelt und zu einer nachgeschalteten Auswerteeinrichtung geleitet. Der Mikrowellensensor 1 ist unmittelbar angrenzend an den Produktraum 8 angeordnet. Um ein Abnutzen der Metallbeschichtungen 4, 5, 10 durch einen Produktstrom zu verhindern, ist der Sensor 1 zu seiner Meßseite hin mit einer bspw. aufgeklebten kreisförmigen Abdeckung 14 versehen, die zweckmäßigerweise aus einem verlustlosen oder -armen Dielektrikum besteht.

Um das Mikrowellenfeld im Bereich des Ringresonators 7 seitlich zu begrenzen, können eine äußere 9a und/oder eine innere konzentrische Abschirmung 9b vorgesehen sein, welche die Schicht 3 jeweils mit einer konzentrischen ringförmigen Metallbeschichtung 10a, 10b auf der meßseitigen Stirnseite der Scheibe 2 leitend verbinden. Die Abschirmungen 9a, 9b können bspw. jeweils aus einzelnen durch die Scheibe verlaufenden Metallstiften 11 bestehen, die jeweils einen ausreichend geringen Abstand voneinander aufweisen.

In dem von dem Ringresonator 7 umschlossenen Innenraum ist eine konzentrische Abschirmung 9c vorgesehen (die auch mit der Abschirmung 9b zusammenfallen kann), welche die Schicht 3 mit einer kreisförmigen konzentrischen Metallbeschichtung 4 auf der meßseitigen Stirnseite der dielektrischen Scheibe 2 verbindet. Die Beschichtung 4 ist mit der Beschichtung 10b als durchgängige kreisförmige Beschichtung gebildet. Durch die Abschirmungen 3, 4, 9c, wird ein geschlossener zylindrischer Referenzresonator 12 gebildet, der mit dem gleichen Dielektrikum wie der Ringresonator 7 gefüllt ist. Ober Anschlüsse 13 werden Mikrowellen, die vorzugsweise von der Einspeisung 6a abgezweigt werden, in den Referenzresonator 12 ein- und ausgekoppelt. Die Beschichtung 4 ist aufgrund ihrer Dicke im Bereich von einigen Mikrometer gut wärmedurchlässig. Sie kann beispielsweise auch netzartig oder perforiert sein, sofern nur die Mikrowellen-Abschirmung sichergestellt ist. Aufgrund des gleichen Materials und der gleichen Dicke der dielektrischen Füllung sowie aufgrund des gleichen Abstands vom Produktraum 8 liegt in beiden Resonatoren 7, 12 jederzeit eine etwa gleiche Temperaturverteilung entlang der Mittelachse des Sensors 1 vor.

Zur Messung wird die Frequenz des Feldes im Ringresonator 7 durch einen Bereich gefahren, der eine bestimmte, isolierte Resonanz enthält, bei der bspw. fünf Wellenlängen auf dem Umfang des Ringresonators 7 Platz finden. Der durchzufahrende Bereich hängt unter anderem vom jeweiligen Produkt und von den in der Praxis auftretenden Feuchte- und Temperaturwerten (aufgrund der daraus folgenden Größe der Resonanzverschiebung) ab. Aus dem Ausgangssignal wird in einer Auswerteeinheit die Resonanzfrequenz f1 und die Halbwertsbreite G1 der gemessenen Resonanz ermittelt. Ein derartiger Meß- und Auswertezyklus kann in einem Bruchteil einer Sekunde erfolgen.

Zu bestimmten Zeitpunkten erfolgt eine entsprechende Messung in dem Referenzresonator 12. Die Frequenz des Feldes im Referenzresonator 12 wird durch einen Bereich gefahren, der eine bestimmte, isolierte Resonanz enthält; es wird ebenfalls die Resonanzfrequenz f2 und die Halbwertsbreite G2 bestimmt. Die Werte f2, G2 sind aufgrund der Mikrowellen-Abschirmung des Referenzresonators 12 zum Produktraum 8 hin durch die Metallbeschichtung 4 unabhängig von der Produktfeuchte. Die Werte f2, G2 werden anschließend anhand von zwei in der Auswerteeinheit gespeicherten Kalibrationskurven in entsprechende Werte f0, G0 umgerechnet. Die Werte f0, G0 bezeichnen die Resonanzfrequenz bzw. die Halbwertsbreite des Ringresonators ohne Produkt (Leermessung). Diese Kalibrationskurven, welche den Zusammenhang zwischen den Größen f2 und f0 sowie zwischen den Größen G2 und G0 für ein bestimmtes Produktmaterial eindeutig festlegt, werden vorab in entsprechenden Kalibrationsmessungen durch Variation der Resonatortemperatur innerhalb eines in der Praxis auftretenden Bereichs bestimmt. Im Betrieb kann dann auf Leermessungen zur Bestimmung der Größen f0, G0 ganz verzichtet werden, was gerade bei Messungen an einem Produktstrom von Vorteil ist, wo Leermessungen nur bei unterbrochenem Produktstrom möglich sind.

Aus den genannten Größen wird in an sich bekannter Weise (DE 29 28 487 A1) eine nur von der Materialfeuchte P, aber weder von der Materialdichte noch - aufgrund der Erfindung - von der Resonatortemperatur abhängige Größe A(P)=(fl-f0)/(G1-G0) gebildet. Die Materialfeuchte P wird aus der Größe A mittels einer in der Auswerteeinheit gespeicherten Kalibrationskurve ermittelt. Diese Kalibrationskurve, welche den Zusammenhang zwischen den Größen A und P für ein bestimmtes Produktmaterial eindeutig festlegt, wird vorab in einer entsprechenden Kalibrationsmessung durch Variation der Produktfeuchte innerhalb eines in der Praxis auftretenden Bereichs bestimmt.

Eine Messung im Referenzresonator 12 kann jeweils im Anschluß an eine Messung im Ringresonator 7 erfolgen. Es kann ausreichen, wenn eine Messung im Referenzresonator 12 spätestens nach jeder zehnten, vorzugsweise spätestens nach jeder hundertsten Messung im Ringresonator 7 erfolgt, wenn sich Temperatureinflüsse nur entsprechend langsam auswirken. Das Verhältnis von Meßzeit zu Totzeit infolge von Referenzmessung kann dadurch verbessert werden.

Die Messungen im Ringresonator 7 und im Referenzresonator 12 erfolgen zur Vermeidung von Dispersionseinflüssen vorzugsweise bei etwa vergleichbaren Frequenzen. Der Referenzresonator 12 ist demnach - im vorliegenden Fall insbesondere hinsichtlich seines Radius - vorzugsweise so bemessen, daß die jeweils zu durchfahrenden Frequenzbereiche bei dem Ringresonator 7 und bei dem Referenzresonator 12 einen mittleren Abstand von weniger als 1 Ghz, vorzugsweise weniger als 100 MHz, weiter vorzugsweise weniger als 10 MHz aufweisen. Die Messungen finden vorzugsweise im Frequenzbereich von 0.1 bis 20 GHz, weiter vorzugsweise 1 bis 5 GHz, weiter vorzugsweise 2 bis 3 GHz, weiter vorzugsweise 2.4 bis 2.5 GHz statt.

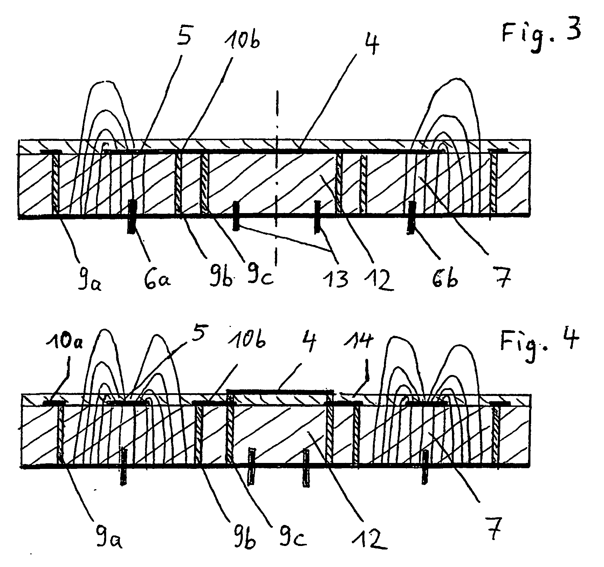

Bei der in Fig. 3 gezeigten Ausführungsform sind die Beschichtungen 5 und 10b auf der Meßseite des Sensors 1 durchgängig miteinander verbunden, so daß die innere ringförmige Öffnung der Mikrostreifenleitung aus Fig. 1, 2 entfällt. Es ist also anstelle der gemäß Fig. 1, 2 den Ringresonator 7 bildenden Mikrostreifenleitung eine nach außen geöffnete Trogleitung vorgesehen. Die Wahl einer anderen Leitungsform, bspw. einer nach innen geöffnete Trogleitung oder einer Schlitzleitung, steht im Belieben des Fachmanns.

Die in Fig. 4 gezeigte Ausführungsform unterscheidet sich derjenigen aus Fig. 1, 2 dadurch, daß sich die Abschirmung 9c meßseitig durch die Abdeckung 14 hindurch erstreckt und die Abschirmung 4 des Referenzresonators 12 zur Meßseite hin auf der Abdekkung 14 anstelle der dielektrischen Scheibe 2 aufgebracht ist.

Dadurch ist es möglich, die von der Abdeckung 14 und einer ggf. vorgesehenen Klebschicht zwischen der Abdeckung 14 und der dielektrischen Scheibe 2 stammende Temperaturabhängigkeit in dem Referenzresonator 12 zu erfassen.

## Patentansprüche

1. Meßanordnung zur Feuchtemessung eines Produkts mittels Mikrowellen, mit einem auf einem externen elektrischen Streufeld beruhenden Mikrowellen-Streufeldresonator (7), wobei der Produktraum außerhalb des Resonatorraums des Streufeldresonators (7) angeordnet ist, und wobei aus dem Streufeldresonator (7) im Betrieb Mikrowellen in einen Produktraum (8) eintreten, **gekennzeichnet durch**, eine Einrichtung zur Kompensation des Einflusses der in dem Mikrowellens-Streufeldresonator (7) herrschenden Temperatur auf das Meßsignal, wobei die Temperaturkompensationseinrichtung einen zweiten Mikrowellenresonator (12) umfaßt, der zum Produktraum (8) hin gegenüber Mikrowellenstrahlung abgeschirmt ist.

2. Meßanordnung nach Anspruch 1, **dadurch gekennzeichnet, daß** infolge einer vom Produktraum (8) ausgehenden Wärmebelastung in dem zweiten Resonator (12) jederzeit eine der Temperaturverteilung des Streufeld Resonators (7) entsprechende Temperaturverteilung vorliegt.

3. Meßanordnung nach Anspruch 1 oder 2, **dadurch gekennzeichnet, daß** der Streufeld Resonator (7) und/oder der zweite Resonator (12) mindestens teilweise mit einem Dielektrikum (2) gefüllt sind.

4. Meßanordnung nach einem der Ansprüche 1 bis 3, **dadurch gekennzeichnet, daß** der zweite Resonator (12) und der Streufeld Resonator (7) im wesentlichen den gleichen Abstand zum Produktraum (8) aufweisen.

5. Meßanordnung nach einem der Ansprüche 1 bis 4, **dadurch gekennzeichnet, daß** der Streufeld Resonator (7) und/oder der zweite Resonator (12) im wesentlichen an den Produktraum (8) angrenzen.

6. Meßanordnung nach einem der Ansprüche 1 bis 5, **dadurch gekennzeichnet, daß** die mittlere Ausdehnung des zweiten Resonators (12) senkrecht zu der den Produktraum (8) begrenzenden Fläche im wesentlichen gleich der entsprechenden mittleren Ausdehnung des Streufeld Resonators (7) ist.

7. Meßanordnung nach einem der Ansprüche 1 bis 6, **dadurch gekennzeichnet, daß** das Material des zweiten Resonators (12) mindestens teilweise im wesentlichen gleiche thermische Eigenschaften aufweist wie das Material des Streufeld-Resonators (7).

8. Meßanordnung nach einem der Ansprüche 1 bis 7, **dadurch gekennzeichnet, daß** der Streufeld-Resonator (7) und der zweite Resonator (12) aneinander angrenzend angeordnet sind.

9. Meßanordnung nach einem der Ansprüche 1 bis 8, **dadurch gekennzeichnet, daß** der Streufeld-Resonator (7) und der zweite Resonator (12) eine bauliche Einheit bilden.

10. Meßanordnung nach einem der Ansprüche 1 bis 9, **dadurch gekennzeichnet, daß** einer der beiden Resonatoren (7) ein Ringresonator ist und der andere Resonator (12) von dem Ringresonator umschlossen ist.

11. Meßanordnung nach einem der Ansprüche 1 bis 10, **dadurch gekennzeichnet, daß** der Streufeld Resonator (7) für die Messung an einem Produktstrom vorgesehen ist.

## Claims

1. Measurement apparatus for measuring the humidity of a product with microwaves, with a microwave stray field resonator (7) based on an external electrical stray field, wherein the product space is arranged outside the resonator space of said stray field resonator (7), and wherein in operation microwaves out of said stray field resonator enter into a product space (8), **characterized by** means for compensating the influence of the temperature present within said microwave stray field resonator (7) on the measurement signal, wherein said temperature compensating means comprises a second microwave resonator (12) which is screened against microwave radiation towards the product space (8).

2. Measurement apparatus according to claim 1, **characterized in that** in said second resonator (12) at any time a temperature distribution corresponding to the temperature distribution of the stray field resonator (7) is present in response to a heat load originating from the product space (8).

3. Measurement apparatus according to any one of claims 1 or 2, **characterized in that** said stray field resonator (7) and/or the second resonator (12) are at least partly filled with a dielectric (2).

4. Measurement apparatus according to any one of claims 1 to 3, **characterized in that** the second resonator (12) and the stray field resonator (7) have essentially the same distance to the product space (8).

5. Measurement apparatus according to any one of claims 1 to 4, **characterized in that** the stray field resonator (7) and/or the second resonator (12) essentially adjoin to the product space (8).

6. Measurement apparatus according to any one of claims 1 to 5, **characterized in that** the average extension of the second resonator (12) perpendicular to the area bordering the product space (8) is essentially equal to the corresponding average extension of the stray field resonator (7).

7. Measurement apparatus according to any one of claims 1 to 6, **characterized in that** the material of the second resonator (12) has at least partly the same thermal properties as the material of the stray field resonator (7).

8. Measurement apparatus according to any one of claims 1 to 7, **characterized in that** the stray field resonator (7) and the second resonator (12) are arranged adjacent to each other.

9. Measurement apparatus according to any one of claims 1 to 8, **characterized in that** the stray field resonator (7) and the second resonator (12) form a constructional unit.

10. Measurement apparatus according to any one of claims 1 to 9, **characterized in that** one of both resonators (7) is a ring resonator and the other resonator (12) is enclosed by said ring resonator.

11. Measurement apparatus according to any one of claims 1 to 10, **characterized in that** the stray field resonator (7) is provided for the measurement at a product stream.

## Revendications

1. Dispositif de mesure pour mesurer l'humidité d'un produit au moyen de micro-ondes, avec un résonateur de champ de dispersion micro-ondes (7) reposant sur un champ de dispersion électrique externe, l'espace du produit étant disposé à l'extérieur de l'espace de résonateur du résonateur de champ de dispersion (7), et des micro-ondes pénétrant pendant le fonctionnement dans un espace de produit (8) en provenance du résonateur de champ de dispersion (7), **caractérisé par** un équipement pour compenser l'influence exercée sur le signal de mesure par la température régnant dans le résonateur de champ de dispersion micro-ondes (7), l'équipement de compensation de température englobant un deuxième résonateur micro-ondes (12) qui est protégé du rayonnement micro-ondes en direction de l'espace de produit (8).

2. Dispositif de mesure selon la revendication 1, **caractérisé en ce que**, du fait d'une charge thermique émanant de l'espace de produit (8), il règne en permanence dans le deuxième résonateur (12) une distribution de températures correspondant à la distribution de températures du résonateur de champ de dispersion (7).

3. Dispositif de mesure selon la revendication 1 ou 2, **caractérisé en ce que** le résonateur de champ de dispersion (7) et/ou le deuxième résonateur (12) sont remplis au moins partiellement d'un diélectrique (2).

4. Dispositif de mesure selon une des revendications 1 à 3, **caractérisé en ce que** le deuxième résonateur (12) et le résonateur de champ de dispersion micro-ondes (7) présentent essentiellement le même intervalle par rapport à l'espace de produit (8).

5. Dispositif de mesure selon une des revendications 1 à 4, **caractérisé en ce que** le résonateur de champ de dispersion (7) et/ou le deuxième résonateur (12) jouxtent essentiellement l'espace de produit (8).

6. Dispositif de mesure selon une des revendications 1 à 5, **caractérisé en ce que** l'étendue moyenne du deuxième résonateur (12) perpendiculairement à la surface délimitant l'espace de produit (8) est identique à l'étendue moyenne correspondante du résonateur de champ de dispersion (7).

7. Dispositif de mesure selon une des revendications 1 à 6, **caractérisé en ce que** le matériau du deuxième résonateur (12) présente au moins partiellement des propriétés thermiques qui sont essentiellement identiques à celles du matériau du résonateur de champ de dispersion (7).

8. Dispositif de mesure selon une des revendications 1 à 7, **caractérisé en ce que** le résonateur de champ de dispersion (7) et le deuxième résonateur (12) sont disposés de façon juxtaposée.

9. Dispositif de mesure selon une des revendications 1 à 8, **caractérisé en ce que** le résonateur de champ de dispersion (7) et le deuxième résonateur (12) forment une unité constructive.

10. Dispositif de mesure selon une des revendications 1 à 9, **caractérisé en ce qu'**un des deux résonateurs (7) est un résonateur annulaire et **en ce que** l'autre résonateur (12) est entouré du résonateur annulaire.

11. Dispositif de mesure selon une des revendications 1 à 10, **caractérisé en ce que** le résonateur de champ de dispersion (7) est prévu pour la mesure sur un flux de produit.
